# EUROPÄISCHE PATENTANMELDUNG

(11) **EP 2 660 033 A1**
(43) Veröffentlichungstag der Anmeldung: **06.11.2013**
(21) Anmeldenummer: 13164370.2
(22) Anmeldetag: 10.09.2009
(51) Int. Cl.: B29C 45/14, G02B 7/00, G02B 7/02, B29C 45/26

(54) **Formteil für optische Zwecke, insbesondere Filterring**

(30) Priorität: 22.09.2008 DE 102008048333
(62) Teilanmeldung aus: 09741207.6
(71) Anmelder: Pentacon Gmbh Foto- Und Feinwerktechnik, 01277 Dresden (DE)
(72) Erfinder: Meissner, Manfred, 01277 Dresden (DE); Ende, Frank, 01156 Dresden (DE)
(74) Vertreter: Carlsohn, Alexander

(57) **Zusammenfassung**

Die Erfindung betrifft ein Formteil für optische Zwecke, bestehend aus einem kreiszylinder- oder linsenförmigen optischen Bauelement (2) aus Glas mit oder ohne Unebenheiten in seinen Flächenseiten sowie einer ringförmigen, einstückigen umspritzten Fassung (3) aus einem starren Kunststoffmaterial, die das optische Bauelement (2) einfaßt.

## Beschreibung

Die Erfindung betrifft ein Formteil für optische Zwecke, umfassend ein scheibenförmiges optisches Bauelement aus Glas, wie eine Linse, einen Filter oder eine Sonnenblende, sowie eine Fassung. Insbesondere betrifft die Erfindung eine Vorsatzlinse oder einen Vorsatzfilter, insbesondere einen Filterring.

In der photographischen Praxis ist es häufig erforderlich, zusätzliche Linsen, Filter und Sonnenblenden zu verwenden, die temporär auf der Fassung des Objektivs photographischer Kameras befestigt werden.

Typischerweise weisen diese zusätzlichen Linsen, Filter oder Sonnenblenden eine ringförmige Fassung aus Metall auf. Die Fassung besitzt häufig ein Innen- und ein Außengewinde. Mittels des Außengewindes, das an der äußeren Mantelfläche des Ringes ausgebildet ist, kann die Fassung in ein komplementäres Innengewinde, das an dem Objektiv ausgebildet ist, eingeschraubt werden. Das Innengewinde der Fassung, das an der inneren Mantelfläche der Fassung ausgebildet ist, ermöglicht es, dort eine weitere gleichartige Fassung zu befestigen, die eine andere Linse usw. trägt. Die Schraubverbindungen ermöglichen es dem Anwender, an dem Objektiv nach seinen Bedürfnissen unterschiedliche optische Systeme zu befestigen.

Heute verwendete ringförmige Fassungen bestehen aus mehreren Einzelteilen, und zwar einem äußeren Ring, einem inneren Ring, der in den äußeren Ring eingeschraubt ist und einem Sprengring: Der äußere Ring weist an seiner inneren Mantelfläche einen konzentrisch umlaufenden Steg auf, der in etwa halber axialer Höhe des Ringes ausgebildet ist. Auf diesen Steg ist der scheibenförmige Filter (oder ein anderes optisches Element) aufgelegt, der mittels des Sprengringes in seiner Position gehalten wird. Der Sprengring wird dabei von dem inneren Ring gehalten, der in den äußeren Ring eingeschraubt ist und an seiner Stirnseite einen konzentrisch umlaufenden, sich in Richtung der Drehachse der Fassung erstreckenden Steg aufweist, der den Sprengring gegen den scheibenförmigen Filter preßt. Der innere Ring ist dabei nicht vollständig in den äußeren Ring eingeschraubt, sondern ragt über diesen axial hinaus. Der äußere Mantel des herausragenden Teils des inneren Rings trägt das Außengewinde der Fassung, das die Befestigung an der Objektivfassung ermöglicht. An der inneren Mantelfläche des äußeren Ringes, die an die Seite des Steges angrenzt, die der Filterscheibe abgewandt ist, ist das Innengewinde der Fassung ausgebildet, das die Befestigung einer weiteren gleichartigen Fassung ermöglicht.

Die Bauteile dieser Fassungen bestehen aus Metall, in der Regel Messing, das eine - fast immer schwarze - Lackierung aufweist.

Die Fertigung solcher Vorsatzlinsen oder -filter ist aufwendig. Zum einen ist die Herstellung der einzelnen Bauteile, zum anderen die Montage der Bauteile und des optischen Bauelements erforderlich, was mehrere Arbeitsschritte erfordert. Ferner neigt die Lackierung nach mehrmaligem Gebrauch der Vorsatzlinse oder des Vorsatzfilters zum Abblättern, zunächst im Bereich der Gewinde, dann auch in den übrigen freiliegenden Bereichen der Fassung. Überdies ist eine Verschiebung des optischen Bauelements in der Fassung nicht ausgeschlossen.

Aus AT 140645 ist eine Fassung für Vorsatzlinsen, -filter oder dergleichen bekannt, die einstückig aus einem elastisch-dehnbaren Material ausgebildet ist. Die Fassung weist in ihrer inneren Mantelfläche eine konzentrisch umlaufende Nut auf, in die die Linse eingesteckt werden kann, was durch die elastischen Eigenschaften des elastisch-dehnbaren Materials ermöglicht wird. Die Fassung kann aufgrund ihrer elastischen Eigenschaften auf die Objektivfassung aufgesteckt werden.

Eine Fassung aus einem elastischen Material ist jedoch zum Verschrauben mit der Objektivfassung einerseits und mit einer anderen gleichartigen Fassung anderseits geeignet. Überdies kann mittels einer solchen Fassung nicht sichergestellt werden, daß die Vorsatzlinse, der Vorsatzfilter usw. tatsächlich auf der optischen Achse des Objektives angeordnet werden, was die Qualität photographischer Aufnahmen beeinträchtigen kann.

DE 196 15 371 C2 beschreibt eine Glasplatte insbesondere für Kochfelder, die in einem umspritzten Kunststoff-Halterahmen eingespritzt ist. Der Halterahmen ist dabei dichtend auf die Glasplatte aufgeschrumpft, wozu ein schrumpf-aufnehmendes Element vorgesehen ist, das zwischen dem Haltrahmen und dem umspritzten Glaskörper angeordnet ist. Das schrumpf-aufhehmende Element soll unter anderem den Bruch der Glasplatte verhindern, da es die Spannungen, die bei der bestimmungsgemäßen Nutzung der Glasplatte entstehen, aufnehmen kann.

Die schrumpf-aufnehmenden Elemente können jedoch ebenfalls zu einer Verschiebung der Linse oder des Filters führen, da kaum sichergestellt werden kann, daß die Schrumpfung gleichmäßig erfolgt.

Aufgabe der Erfindung ist es, die Nachteile nach dem Stand der Technik zu beseitigen. Es soll insbesondere ein Formteil für optische Zwecke mit einem optischen Bauelement und einer Fassung angegeben werden, die kostengünstig hergestellt werden kann, eine exakte und unveränderliche Position des optischen Bauelementes in der Fassung sicherstellt und eine exakte Befestigung an einem Objektiv ermöglicht.

Diese Aufgabe wird durch die Merkmale der Ansprüche 1 und 10 gelöst. Zweckmäßige Ausgestaltungen der Erfindungen ergeben sich aus den Merkmalen der Ansprüche 2 bis 9 und 10 bis 12.

Nach Maßgabe der Erfindung ist ein Formteil für optische Zwecke vorgesehen, das aus einem scheibenförmigen optischen Bauelement aus Glas sowie einer einstückigen umspritzten Fassung aus einem starren Kunststoffmaterial, die das scheibenförmige optische Bauelement einfaßt, besteht. Die Fassung faßt das scheibenförmige optische Bauelement formschlüssig ein. Vorzugsweise ist die Fassung ringförmig.

Das scheibenförmige optische Bauelement besteht aus Glas. Das Bauelement sollte hohe mechnaische Festigkeitswerte aufweisen, um die gewünschten optischen Eigenschaften und die erforderliche mechanische Stabilität zu erreichen.

Bei dem scheibenförmigen optischen Bauelement kann es sich beispielsweise um einen Filter, insbesondere einen Polarisationsfilter oder UV-Sperrfilter; oder eine Linse handeln. Das scheibenförmige optische Bauelement ist vorzugsweise kreiszylinderförmig.

Ein bevorzugtes erfindungsgemäßes Formteil für optische Zwecke ist ein Vorsatzfilter, insbesondere ein Filterring.

Im Vergleich zum Stand der Technik kann das erfindungsgemäße Formteil in einem Arbeitsgang hergestellt werden, da die Fassung des Formteils nicht aus Einzelteilen zusammengesetzt werden muß. Ferner wird die Fertigung von Einzelteilen vermieden, da deren Gewinde aufeinander abgestimmt sein müssen. Aufgrund des Umspritzens des scheibenförmigen optischen Bauelementes und der formschlüssigen Verbindung zwischen der Fassung und dem optischen Bauelement wird ein Verrutschen des optischen Bauelementes unter allen Umständen verhindert. Aufgrund dessen wird eine hohe Stabilität des gesamten Formteils erreicht.

Der Kunststoff kann beliebig gefärbt sein. Eine Lackering der Fassung oder seiner Bauteile ist somit nicht erforderlich. Aus diesem Grund kann auch kein Lack abplatzen.

In einer bevorzugten Ausführungsform ist an der äußeren Mantelfläche der ringförmigen Fassung ein Außengewinde ausgebildet und an der inneren Mantelfläche der ringförmigen Fassung ein Innengewinde ausbildet.

Zweckmäßigerweise sind ferner an der inneren Mantelfläche der ringförmigen Fassung ein erster konzentrisch umlaufender Steg und ein zweiter konzentrisch umlaufender Steg ausgebildet, der von dem ersten umlaufenden Steg beabstandet ist, wobei zwischen dem ersten Steg und dem zweiten Steg das scheibenförmige optische Bauelement angeordnet ist.

Bevorzugt grenzt der zweite Steg an die erste Stirnseite der ringförmigen Fassung an, wobei der erste Steg sowohl von der ersten Stirnseite als auch der zweiten Stirnseite der ringförmigen Fassung beabstandet ist. Dabei sollte der Bereich der inneren Mantelfläche der ringförmigen Fassung, der sich zwischen dem ersten Steg und der zweiten Stirnseite der ringförmigen Fassung befindet, das Innengewinde aufweisen. An der äußeren Mantelfläche ist vorzugsweise eine konzentrisch umlaufende Nut oder Verjüngung ausgebildet, wobei die Mantelfläche der Nut oder Verjüngung das Außengewinde aufweist.

Der Kunststoff ist zweckmäßigerweise ein thermoplastisches Polymer, vorzugsweise Polyamid oder Polyamid 6, insbesondere glaskugel-gefülltes Polyamid 6. Der Kunststoff sollte ausreichende mechanische Festigkeit und Elastizität sowie geringe Querschnitte besitzen, um große Spannungen auszugleichen und/oder aufzunehmen. Der Kunststoff ist bei Umgebungstemperaturen zwischen -25 und +85 °C vorzugsweise so elastisch, dass unterschiedliche Temperaturkoeffizienten zwischen Glas und Kunststoff ausgeglichen werden können. Auf diese Weise werden Differenzspannungen durch die Elastizität des Kunststoffes ausgeglichen.

Die Verbindung zwischen dem scheibenförmigen Bauelement und der Fassung ist durch Formschluss und Aufschrumpfung abgesichert.

Nach Maßgabe der Erfindung ist ferner ein Verfahren zur Herstellung des erfindungsgemäßen Formteils für optische Zwecke vorgesehen, das die folgenden Schritte umfaßt:
(a) Einführen des scheibenförmigen optischen Bauelementes in die Spritzgießform einer Spritzgießmaschine;
(b) Fixieren des scheibenförmigen optischen Bauelementes in der Spritzgießform mittels Werkzeugelementen, die das scheibenförmige optische Element an dessen Flächenseiten kontaktieren, wobei das Bauelement an seiner Mantelfläche freiliegt;
(c) Einspritzen des Kunststoffmaterials in die Kavität, die von den Werkzeugelementen und dem scheinförmigen optischen Bauelement umgrenzt wird; und
(d) Härten des Kunststoffes unter Ausbildung der einstückigen, umspritzten Fassung.

Anschließend kann das fertige Formteil aus der Spritzgießmaschine entnommen werden.

Unebenheiten in den Flächenseiten des scheibenförmigen optischen Bauelementes sollten mittels der Werkzeugelemente ausgeglichen werden. Vorteilhafterweise wird dazu mittels des Schließdrückes, mit dem die Spritzgießform nach dem Einlegen des scheibenförmigen optischen Bauelementes geschlossen wird, die Position der Werkzeugelemente bestimmt, die in Kontakt mit dem scheibenförmigen optischen Bauelement gelangen, wobei diese Werkzeugelemente so angeordnet werden, daß die Unebenheiten in den Flächenseiten des optischen Bauelementes ausgeglichen werden.

In einer Ausführungsform des erfindungsgemäßen Verfahrens zur Herstellung eines Filterringes entnimmt eine Einrichtung (auch als Handling bezeichnet) einem Magazin eine Filterglasscheibe, wobei die Lage der Filterglasscheibe zum Handling genau fixiert ist. Der Handling übergibt anschließend lagerichtig und vorfixiert die Filterglasscheibe (jetzt als Einlegeteil bezeichnet) in die Kavität einer geöffneten Spritzgießform. Die Spritzgießform übernimmt das Einlegeteil durch Ansaugen mittels Vakuum, wonach das Handling aus der geöffneten Spritzgießform entfernt wird. Die Spritzgießform wird dann geschlossen und der Schließdruck aufgebaut, wobei Werkzeugelemente die Dickentoleranz von ca. +/-0,2 mm der Filterglasscheibe ausgleichen. Dabei bleibt die Filterglasscheibe in ihrer Lage fixiert ohne radial die Wandung der Spritzgießform zu berühren. Die Werkzeugelemente, insbesondere Formeinsätze, Schieber und Gewindeentspindlungen, formen die Kontur der Kunststoff-Fassung an der Filterglasscheibe aus. Die Kavität, die von den Werkzeugelementen und der Filterglasscheibe umgrenzt wird, wird dann mit dem Kunststoff über das Angußsystem der Spritzgießmaschine gefüllt. Nach dem Abkühlen der Kunststoffmasse wird die Spritzform geöffnet und das erhaltene Formteil freigelegt. Der Anguß wird beim Öffnen automatisch vom Formteil unter Erhalt des Filterringes entfernt. Die umspritzte Filterglasscheibe wird durch ein Handling aus der Spritzgießform entnommen.

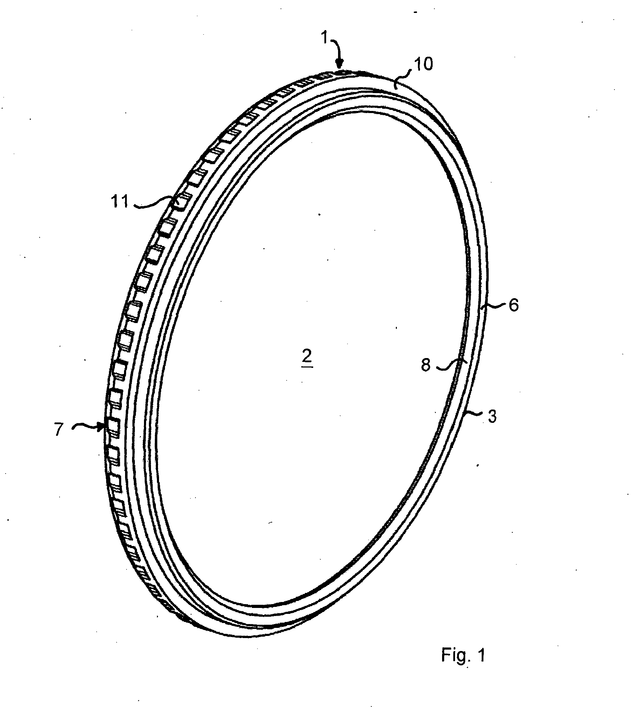

Die Erfindung wird nachstehend anhand eines Ausführungsbeispiels, das die Erfindung nicht einschränken soll, unter Bezugnahme auf die Zeichnungen näher erläutert. Dabei zeigen
- Fig. 1: eine perspektivische Darstellung einer Ausführungsform eines erfindungsgemäßen Filterrings;

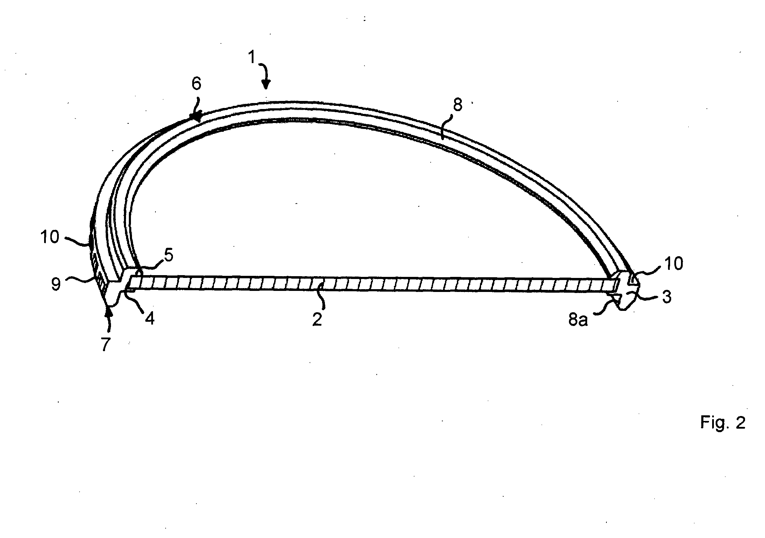

- Fig. 2: eine Schnittdarstellung des in Fig. 1 gezeigten Filterringes,

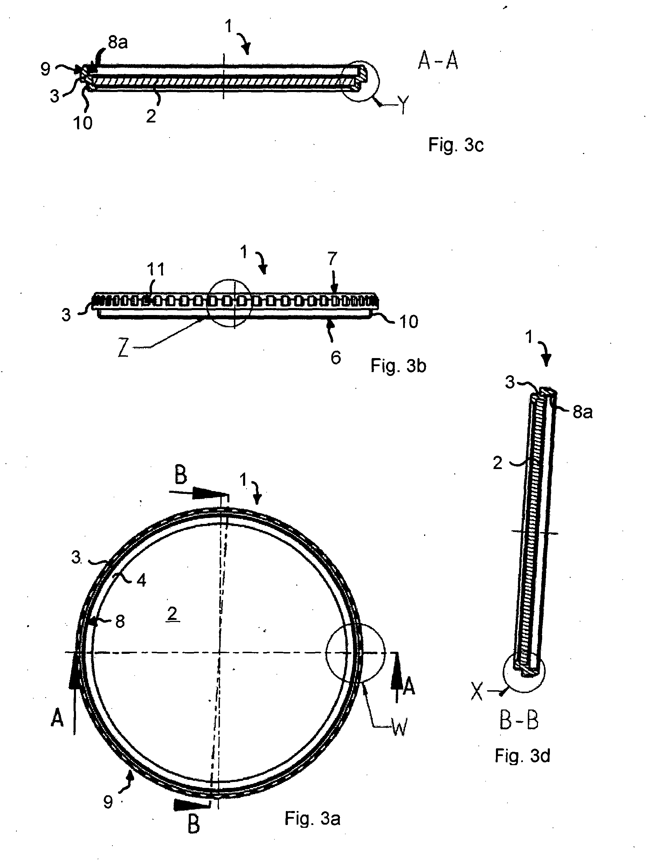

- Fig. 3a: eine Vorderansicht des in Fig. 1 gezeigten Filterringes;
- Fig. 3b: eine Seitenansicht des in Fig. 3 gezeigten Filterringes;
- Fig. 3c: eine Schnittdarstellung des in Fig. 3 gezeigten Filterringes entlang der Linie A-A;
- Fig. 3d: eine Schnittdarstellung des in Fig. 3 gezeigten Filterringes entlang der Linie B-B;

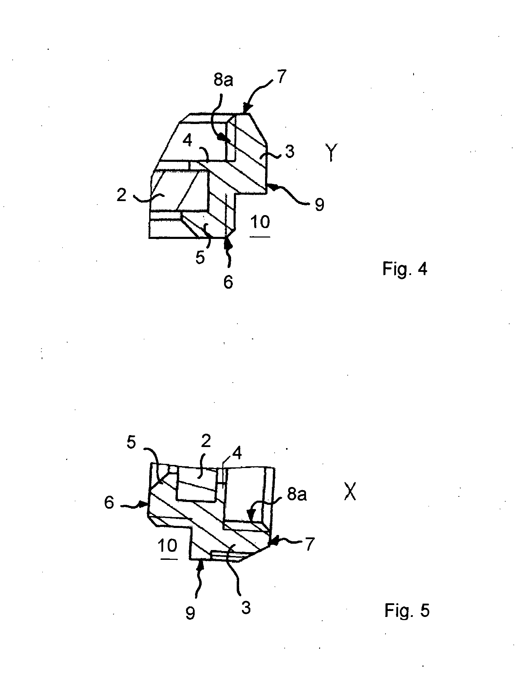

- Fig. 4: eine vergrößerte Schnittdarstellung des Ausschnittes Y von Fig. 3c;

- Fig. 5: eine vergrößerte Schnittdarstellung des Ausschnittes X von Fig. 3d;

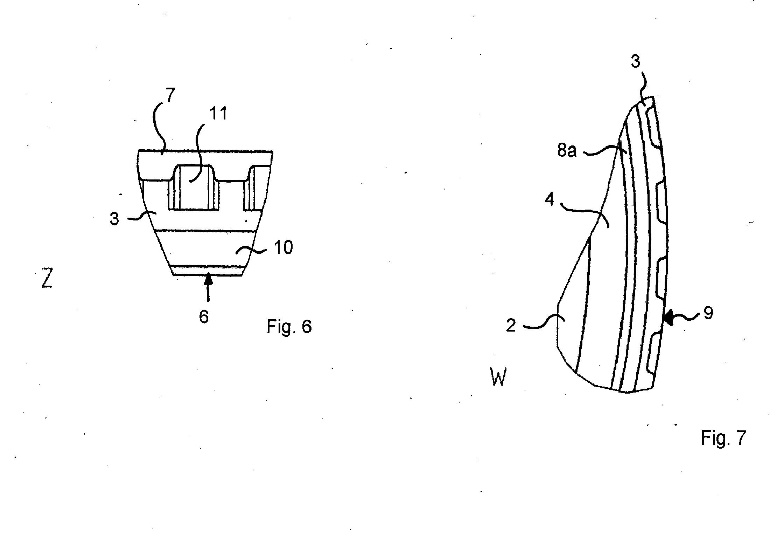

- Fig. 6: einen vergrößerten Ausschnitt Z von Fig. 3b; und
- Fig. 7: einen vergrößerten Ausschnitt W von Fig. 3a.

Nach den Figuren besteht der erfindungsgemäße Filterring 1 aus einer kreiszylinderförmiger Filterglasscheibe 2 und einer einstückigen umspritzten Fassung 3, die die Filterglasscheibe 2 einfaßt. Die Fassung besteht aus Polyamid 6, das mit 30 Gew.-% Glaskugeln gefüllt ist (vertrieben unter der Bezeichnung "Akromid B3 GK 30" von Akro-Plastic GmbH, Niederzissen, DE).

Die Fassung 3 ist ringförmig. An der inneren Mantelfläche der ringförmigen Fassung 3 sind ein erster konzentrisch umlaufender Steg 4 und ein zweiter konzentrisch umlaufender Steg 5 ausgebildet, der von dem ersten umlaufenden Steg 4 beabstandet ist. Der zweite Steg 5 grenzt an die erste Stirnseite 6 der ringförmigen Fassung an, während der erste Steg 4 sowohl von der ersten Stirnseite 6 als auch der zweiten Stirnseite 7 der ringförmigen Fassung 3 beabstandet ist und sich ungefähr auf halber Höhe in bezug auf die axiale Ausdehnung der Fassung 3 befindet. Zwischen dem ersten Steg 4 und dem zweiten Steg 5 ist die Filterglasscheibe 2 angeordnet.

Im Bereich 8a der inneren Mantelfläche 8 der ringförmigen Fassung 3, der sich zwischen dem ersten Steg 4 und der zweiten Stirnseite 7 der ringförmigen Fassung 3 befindet, ein Innengewinde zur Verbindung der Fassung 3 mit einer weiteren Vorsatzlinse oder einem weiterem Vorsatzfilter, beispielsweise Filterring, ausgeformt. An der äußeren Mantelfläche 9 ist vorzugsweise eine konzentrisch umlaufende Verjüngung 10 ausgebildet, deren konzentrisch umlaufende Mantelfläche das Außengewinde, mit dessen Hilfe das Formteil 1 in die Fassung eines Objektives eingeschraubt werden kann, aufweist.

An der äußeren Mantelfläche 9 kann ebenfalls eine umlaufende Riffelung 11 vorgesehen sein, um das Ein- und Ausschreiben des Formteils 1 aus der Fassung des Objektives zu erleichtern.

### Bezugszeichenliste

- 1: Filterring
- 2: Filterglasscheibe
- 3: Fassung
- 4: erster Steg
- 5: zweiter Steg
- 6: erste Stirnseite
- 7: zweite Stirnseite
- 8: innere Mantelfläche
- 8a: Bereich der inneren Mantelfläche
- 9: äußere Mantelfläche
- 10: Verjüngung
- 11: Riffelung

## Patentansprüche

1. Formteil für optische Zwecke, bestehend aus einem kreiszylinder- oder linsenförmigen optischen Bauelement (2) aus Glas mit oder ohne Unebenheiten in seinen Flächenseiten sowie einer ringförmigen, einstückigen umspritzten Fassung (3) aus einem starren Kunststoffmaterial, die das optische Bauelement (2) einfaßt.

2. Formteil nach Anspruch 1, **dadurch gekennzeichnet, daß** die Fassung (3) das optische Bauelement (2) formschlüssig einfaßt.

3. Formteil nach Anspruch 2, **dadurch gekennzeichnet, daß** an der äußeren Mantelfläche (9) der ringförmigen Fassung (3) ein Außengewinde ausgebildet ist und an der inneren Mantelfläche (8) der ringförmigen Fassung (3) ein Innengewinde ausbildet ist.

4. Formteil nach Anspruch 2 oder Anspruch 3, **dadurch gekennzeichnet, daß** an der inneren Mantelfläche (8) der ringförmigen Fassung (3) ein erster konzentrisch umlaufender Steg (4) und ein zweiter konzentrisch umlaufender Steg (5) ausgebildet sind, der von dem ersten umlaufenden Steg (4) beabstandet ist, wobei zwischen dem ersten Steg (4) und dem zweiten Steg (5) das optische Bauelement (2) angeordnet ist.

5. Formteil nach Anspruch 3 oder Anspruch 4, **dadurch gekennzeichnet, daß** der zweite Steg (5) an der erste Stirnseite (6) der ringförmigen Fassung (3) angrenzt und der erste Steg (4) sowohl von der ersten Stirnseite (6) als auch der zweiten Stirnseite (7) der ringförmigen Fassung (3) beabstandet ist, wobei der Bereich (8a) der inneren Mantelfläche (8) der ringförmigen Fassung (3) das Innengewinde aufweist, der sich zwischen dem ersten Steg (4) und der zweiten Stirnseite (7) der ringförmigen Fassung (3) befindet.

6. Formteil nach einem der Ansprüche 2 bis 5, **dadurch gekennzeichnet, daß** an der äußeren Mantelfläche (9) eine konzentrische umlaufende Verjüngung (10) ausgebildet ist, wobei die Mantelfläche der Verjüngung (10) das Außengewinde aufweist.

7. Formteil nach einem der vorstehenden Ansprüche, **dadurch gekennzeichnet, daß** das optische Bauelement (2) ein Filter, insbesondere ein Polarisationsfilter oder UV-Sperrfilter ist.

8. Formteil nach einem der vorstehenden Ansprüche, **dadurch gekennzeichnet, daß** das Kunststoffmaterial ein thermoplastisches Polymer ist.
